(19) Europäisches Patentamt
European Patent Office
Office européen des brevets

(11) **EP 4 765 266 A1**

(12) **EUROPEAN PATENT APPLICATION**

(43) Date of publication:
24.06.2026 Bulletin 2026/26

(21) Application number: 25217675.5

(22) Date of filing: 21.11.2025

(51) International Patent Classification (IPC):
H01M 10/04 (2006.01)        H01M 50/423 (2021.01)
H01M 50/457 (2021.01)       H01M 50/474 (2021.01)
H01M 50/489 (2021.01)       H01M 10/0587 (2010.01)

(52) Cooperative Patent Classification (CPC):
H01M 10/0431; H01M 10/0422; H01M 10/0587;
H01M 50/423; H01M 50/457; H01M 50/474;
H01M 50/489

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 12.12.2024 US 202418979006

(71) Applicant: Tesla, Inc.
Austin, TX 78725 (US)

(72) Inventors:
• PANCHAL, Sachin Nayan
Austin, 78725 (US)

• ANAND, Anish
Austin, 78725 (US)
• PAYNE, Nicholas Emery
Austin, 78725 (US)
• SONG, Shaopin
Austin, 78725 (US)
• KANKANALA, Penchala Narasimha Rao
Austin, 78725 (US)

(74) Representative: Zacco Sweden AB
P.O. Box 5581
Löjtnantsgatan 21
114 85 Stockholm (SE)

(54) **SEPARATOR ASSEMBLIES FOR USE IN ENERGY STORAGE DEVICES, AND METHODS THEREOF**

(57) A separator assembly for use in energy storages devices comprising a separator layer and a supporting tape, and methods thereof are disclosed. Separator assemblies utilizing a supporting tape such as a barrier layer and/or a coil core layer provides additional support to prevent electrode buckling and to protect the separator layer from wear-related electrode buckling and puncture over the life of the energy storage device.

EP 4 765 266 A1

**Description**

REFERENCE TO PRIORITY APPLICATIONS

This application claims the benefit of priority to U.S. Patent Application No. 18/979,006, entitled "SEPARATOR ASSEMBLIES FOR USE IN ENERGY STORAGE DEVICES, AND METHODS THEREOF," filed on December 12, 2024.

BACKGROUND

Electrode buckling and short circuiting due to wear-related issues are typical failures known to occur over a life of an energy storage device. Currently, energy storage devices are produced by fitting or inserting a solid rigid material (e.g., sacrificial mandrel, a core pin) to provide protection against electrode buckling during usage or cycling. However, the solid rigid materials occupy a large portion of a core of an energy storage device, resulting in design inflexibilities and an increase in manufacturing time and costs.

As such, improved energy storage devices with separator assemblies are desired.

SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

In one aspect, an energy storage device is described. The energy storage device includes: an electrode assembly including a cathode including a cathode leading edge, an anode including an anode leading edge and an anode overhang area extending beyond the cathode leading edge, and a separator assembly disposed between the cathode and the anode, wherein the separator assembly includes a separator layer, a coil core supporting tape and a barrier layer supporting tape, wherein the separator layer includes a cathode facing surface an anode facing surface, wherein the coil core supporting tape includes a coil supporting layer and a coil adhesive layer, wherein the coil adhesive layer is disposed directly over the separator layer, wherein the coil supporting layer includes a metal material selected from the group consisting of copper, aluminum, magnesium, or combinations thereof, and wherein the coil core supporting tape is disposed over the anode leading edge, and wherein the barrier layer supporting tape includes a barrier supporting layer and a barrier adhesive layer, wherein the barrier adhesive layer is disposed directly over the separator layer, and wherein the barrier layer supporting tape is disposed over the cathode leading edge, an electrolyte, and a housing, wherein the electrode assembly and the electrolyte are disposed within the housing.

In another aspect, an electrode assembly for an energy storage device is described. The electrode assembly includes: a cathode, an anode, and a separator assembly disposed between the cathode and the anode, wherein the separator assembly includes a separator layer including a cathode facing surface and an anode facing surface, and a supporting tape including a supporting layer and an adhesive layer, wherein the adhesive layer is disposed directly over the separator layer.

In some embodiments, the anode includes an anode overhang area. In some embodiments, the supporting layer includes a barrier layer, and wherein the adhesive layer is disposed over the cathode facing surface. In some embodiments, the barrier layer includes a barrier layer thickness of about 5-20 $\mu$m. In some embodiments, the barrier layer includes a polyimide material.

In some embodiments, the supporting layer includes a coil core layer, and wherein at least a portion of the adhesive layer is disposed over the anode facing surface. In some embodiments, the coil core layer includes a material selected from the group consisting of a metal, a polymer, and combinations thereof. In some embodiments, the metal is selected from the group consisting of copper, aluminum, magnesium, or combinations thereof. In some embodiments, the coil core layer includes a coil core layer thickness of about 75-125 $\mu$m. In some embodiments, the coil core layer is disposed over the anode facing surface.

In some embodiments, the electrode assembly further includes an additional separator assembly, wherein the additional separator assembly is disposed over the cathode on a side of the cathode opposite the separator assembly. In some embodiments, the additional separator assembly includes an additional supporting layer. In some embodiments, the supporting layer is aligned with a leading edge of the anode or a leading edge of the cathode. In some embodiments, the supporting layer overlaps the leading edge of the anode or the leading edge of the cathode by about 10-20 mm. In some embodiments, the anode overhangs a leading edge of the cathode by about 40-60 mm. In some embodiments, the supporting layer overlaps the leading edge of the anode overhang area by about 10-20 mm. In some embodiments, the anode or cathode includes a stiffness of at least about 2 GPa.

In another aspect, an energy storage device is described. The energy storage device includes an electrode assembly, an electrolyte, and a housing, wherein the electrode assembly and the electrolyte are disposed within the housing.

In some embodiments, the method includes disposing the separator assembly between the cathode and the anode. In some embodiments, the method further includes disposing the supporting tape over the cathode facing surface at a tape disposing speed of at least about 3 m/s. In some embodiments, the method further includes disposing the supporting tape over the anode facing surface at a tape disposing speed of at least about 3 m/s.

In another aspect, a method of preparing a rolled electrode assembly is described. The method includes: preparing an electrode assembly and rolling the electrode assembly to form a rolled electrode assembly.

In another aspect, a method of forming an energy storage device is described. The method includes: preparing a rolled electrode assembly and disposing the rolled electrode assembly and an electrolyte within a housing.

BRIEF DESCRIPTION OF THE DRAWINGS

FIG. 1A is a schematic illustration showing a separator assembly with supporting tapes, according to some embodiments.

FIG. 1B is another schematic illustration showing a separator assembly with supporting tapes, according to some embodiments.

FIG. 1C is another schematic illustration showing a separator assembly with supporting tapes, according to some embodiments.

FIG. 1D is another schematic illustration showing a separator assembly with supporting tapes, according to some embodiments.

FIG. 2A is a schematic illustration showing a separator assembly with a barrier layer supporting tape, according to some embodiments.

FIG. 2B is another schematic illustration showing a separator assembly with a barrier layer supporting tape, according to some embodiments.

FIG. 2C is a schematic illustration showing a separator assembly with a coil core supporting tape, according to some embodiments.

FIG. 2D is another schematic illustration showing a separator assembly with a coil core supporting tape, according to some embodiments.

FIG. 3A is a schematic illustration showing an electrode assembly with separator assemblies, according to some embodiments.

FIG. 3B is another schematic illustration showing an electrode assembly with separator assemblies, according to some embodiments.

FIG. 3C is another schematic illustration showing an electrode assembly with separator assemblies, according to some embodiments.

FIG. 3D is another schematic illustration showing an electrode assembly with separator assemblies, according to some embodiments.

FIG. 3E is another schematic illustration showing an electrode assembly with separator assemblies, according to some embodiments.

FIG. 3F is another schematic illustration showing an electrode assembly with separator assemblies, according to some embodiments.

FIG. 4A is a schematic illustration showing a wound electrode assembly, according to some embodiments.

FIG. 4B is another schematic illustration showing a wound electrode assembly, according to some embodiments.

FIG. 4C is another schematic illustration showing a wound electrode assembly, according to some embodiments.

FIG. 5A is a top-view image of a rolled electrode assembly, according to some embodiments.

FIG. 5B is a magnified top-view image of a rolled electrode assembly of FIG. 5A, according to some embodiments.

FIG. 6 is a top-view image of a portion of a rolled electrode assembly magnified on a leading edge of the cathode, according to some embodiments.

It will be clearly understood though, that the examples and figures are for illustrative purpose only, and are not necessarily restrictive of the scope of the present invention.

DETAILED DESCRIPTION

Although certain preferred embodiments and examples are disclosed below, the inventive subject matter extends beyond the specifically disclosed embodiments to other alternative embodiments and/or uses and to modifications and equivalents thereof. Thus, the scope of the claims appended hereto is not limited by any of the particular embodiments described below. For example, in any method or process disclosed herein, the acts or operations of the method or process may be performed in any suitable sequence and are not necessarily limited to any particular disclosed sequence. Various operations may be described as multiple discrete operations, in turn, in a manner that may be helpful in understanding certain embodiments; however, the order of description should not be construed to imply that these operations are order-dependent. Additionally, the structures, systems, and/or devices described herein may be embodied as integrated components or as separate components. For purposes of comparing various embodiments, certain aspects and advantages of these embodiments are described. Not necessarily all such aspects or advantages are achieved by any particular embodiment. Thus, for example, various embodiments may be carried out in a manner that achieves or optimizes one advantage or group of advantages as taught herein without necessarily achieving other aspects or advantages as may also be taught or suggested herein.

An energy storage device including separator assemblies are described. Typically, an energy storage device includes an electrode assembly, an electrolyte and a housing, wherein the electrode assembly and the electrolyte are disposed within the housing. The electrode assembly generally includes a cathode, an anode and a separator disposed between the cathode and anode. In order to save time and costs associated with energy storage device manufacturing and to protect the device from electrode buckling and short circuiting, a separator assembly including a separator layer and a supporting tape is described herein.

A separator assembly may include a separator layer and a supporting tape. A supporting tape (e.g., coil core supporting tape, barrier layer supporting tape) may include a supporting layer (e.g., coil supporting layer or coil core layer, barrier supporting layer or barrier layer) and an adhesive layer (e.g., coil adhesive layer, barrier adhesive layer). The coil core supporting tape including the coil supporting layer and the coil adhesive layer may be used to protect the energy storage device against electrode buckling. The barrier layer supporting tape including the barrier supporting layer and the barrier adhesive layer may be used to protect the separator layer from punctures, thereby preventing short circuiting of the electrodes.

Separator Assemblies

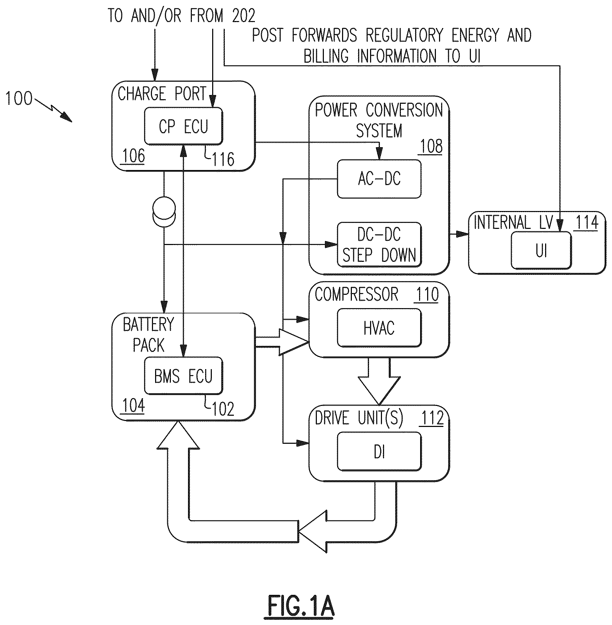

FIGS. 1A-1D are schematic illustrations showing separator assemblies in various configurations. A separator assembly that includes a separator layer and supporting tapes may be produced or formed in various configurations. For example, FIG. 1A is a schematic illustration of a separator assembly 100A. As shown in FIG. 1A, the separator assembly 100A includes a separator layer 105A, a cathode facing surface 115A and an anode facing surface 125A of the separator layer 105A. The separator assembly 100A further includes a barrier layer supporting tape 150A and a coil core supporting tape 175A. The barrier layer supporting tape 150A and the coil core supporting tape 175A are positioned along a length of the separator layer 105A without contacting or overlapping each other. The barrier layer supporting tape 150A includes a barrier adhesive layer 155A disposed over the cathode facing surface 115A of the separator layer 105A. The barrier layer supporting tape 150A also includes a barrier supporting layer 160A disposed over a side of the barrier adhesive layer 155A opposite the cathode facing surface 115A. The coil core supporting tape 175A includes a coil adhesive layer 180A disposed over the anode facing surface 125A of the separator layer 105A. The coil core supporting tape 175A also includes a coil supporting layer 185A disposed over a side of the coil adhesive layer 180A opposite the anode facing surface 125A.

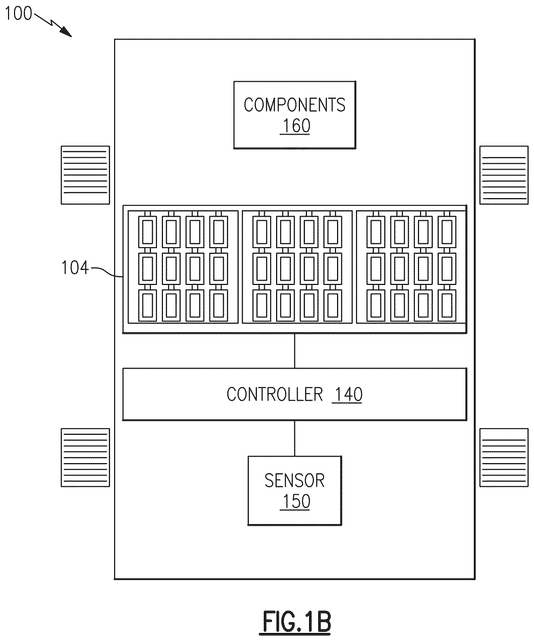

FIG. 1B is another schematic illustration of a separator assembly 100B. As shown in FIG. 1B, the separator assembly 100B includes a separator layer 105B, a cathode facing surface 115B and an anode facing surface 125B of the separator layer 105B. The separator assembly 100B further includes a barrier layer supporting tape 150B and a coil core supporting tape 175B. The barrier layer supporting tape 150B and the coil core supporting tape 175B are positioned along a length of the separator layer 105B without contacting or overlapping each other. The barrier layer supporting tape 150B includes a barrier adhesive layer 155B disposed over the cathode facing surface 115B of the separator layer 105B. The barrier layer supporting tape 150B also includes a barrier supporting layer 160B disposed over a side of the barrier adhesive layer 155B opposite the cathode facing surface 115B. The coil core supporting tape 175A includes a coil adhesive layer 180B disposed over the cathode facing surface 115B of the separator layer 105B. The coil core supporting tape 175B also includes a coil supporting layer 185B disposed over a side of the coil adhesive layer 180B opposite the cathode facing surface 115B.

FIG. 1C is another schematic illustration of a separator assembly 100C. As shown in FIG. 1C, the separator assembly 100C includes a separator layer 105C, a cathode facing surface 115C and an anode facing surface 125C of the separator layer 105C. The separator assembly 100C further includes a barrier layer supporting tape 150C and a coil core supporting tape 175C. The barrier layer supporting tape 150C and the coil core supporting tape 175C are positioned along a length of the separator layer 105C without contacting or overlapping each other. The barrier layer supporting tape 150C includes a barrier adhesive layer 155C disposed over the anode facing surface 125C of the separator layer 105C. The barrier layer supporting tape 150C also includes a barrier supporting layer 160C disposed over a side of the barrier adhesive layer 155C opposite the anode facing surface 125C. The coil core supporting tape 175C includes a coil adhesive layer 180C disposed over the anode facing surface 125C of the separator layer 105C. The coil core supporting tape 175C also includes a coil supporting layer 185C disposed over a side of the coil adhesive layer 180C opposite the anode facing surface 125C.

FIG. 1D is another schematic illustration of a separator assembly 100D. As shown in FIG. 1D, the separator assembly 100D includes a separator layer 105D, a cathode facing surface 115D and an anode facing surface 125D of the separator layer 105D. The separator assembly 100D further includes a barrier layer supporting tape 150D and a coil core supporting tape 175D. The barrier layer supporting tape 150D and the coil core supporting tape 175D are positioned along a length of the separator layer 105D without contacting or overlapping each other. The barrier layer supporting tape 150D includes a barrier adhesive layer 155D disposed over the anode facing surface 125D of the separator layer 105D. The barrier layer supporting tape 150D also includes a barrier supporting layer 160D disposed over a side of the barrier adhesive layer 155D opposite the anode facing surface 125D. The coil core supporting tape 175D includes a coil adhesive layer 180D disposed over the cathode facing surface 115D of the separator layer 105D. The coil core supporting tape 175D also includes a coil supporting layer 185D disposed over a side of the coil adhesive layer 180D opposite the cathode facing surface 115D.

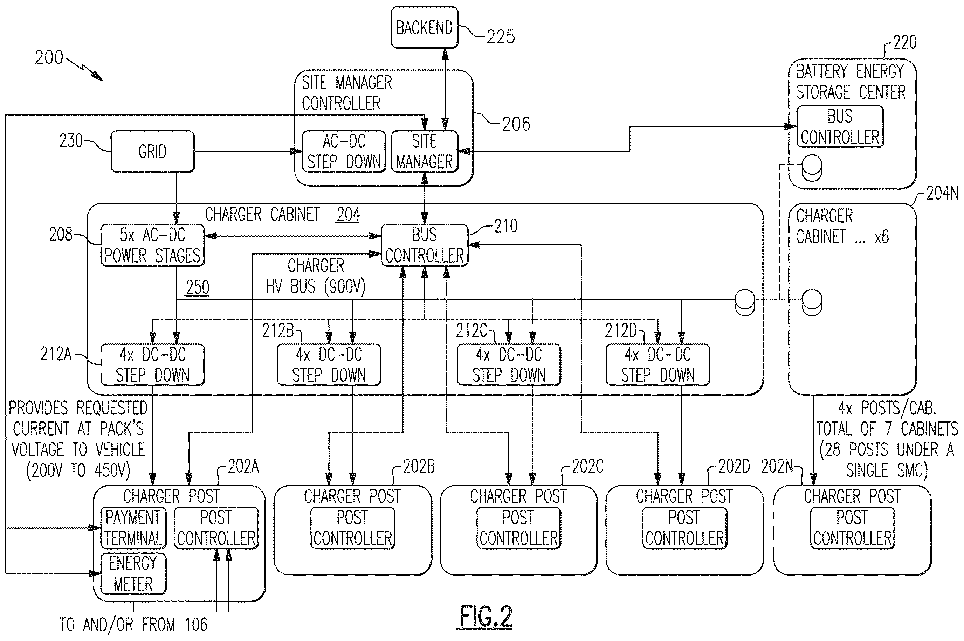

FIGS. 2A-2D are schematic illustrations showing separator assemblies in various configurations. A separator assembly that includes a separator layer and a supporting tape may be produced or formed in various configurations. For example, FIG. 2A is a schematic illustration of a separator assembly 200A. As shown in FIG. 2A, the separator assembly 200A includes a separator layer 205A, a cathode facing surface 215A and an anode facing surface 225A of the separator layer 205A. The separator assembly 200A further includes a barrier layer supporting tape 250A positioned along a length of the separator layer 205A. The barrier layer supporting tape 250A includes a barrier adhesive layer 255A disposed over the cathode facing surface 215A of the separator layer 205A. The barrier layer supporting tape 250A also includes a barrier supporting layer 260A disposed over a side of the barrier adhesive layer 255A opposite the cathode facing surface 215A.

FIG. 2B is another schematic illustration of a separator assembly 200B. As shown in FIG. 2B, the separator assembly 200B includes a separator layer 205B, a cathode facing surface 215B and an anode facing surface 225B of the separator layer 205B. The separator assembly 200B further includes a barrier layer supporting tape 250B positioned along a length of the separator layer 205B. The barrier layer supporting tape 250B includes a barrier adhesive layer 255B disposed over the anode facing surface 225B of the separator layer 205B. The barrier layer supporting tape 250B also includes a barrier supporting layer 260B disposed over a side of the barrier adhesive layer 255B opposite the anode facing surface 225B.

FIG. 2C is another schematic illustration of a separator assembly 200C. As shown in FIG. 2C, the separator assembly 200C includes a separator layer 205C, a cathode facing surface 215C and an anode facing surface 225C of the separator layer 205C. The separator assembly 200C further includes a coil core supporting tape 275C positioned along a length of the separator layer 205C. The coil core supporting tape 275C includes a coil adhesive layer 280C disposed over the anode facing surface 225C of the separator layer 205C. The coil core supporting tape 275C also includes a coil supporting layer 285C disposed over a side of the coil adhesive layer 280C opposite the anode facing surface 225C.

FIG. 2D is another schematic illustration of a separator assembly 200D. As shown in FIG. 2D, the separator assembly 200D includes a separator layer 205D, a cathode facing surface 215D and an anode facing surface 225D of the separator layer 205D. The separator assembly 200D further includes a coil core supporting tape 275D positioned along a length of the separator layer 205D. The coil core supporting tape 275D includes a coil adhesive layer 280D disposed over the cathode facing surface 215D of the separator layer 205D. The coil core supporting tape 275D also includes a coil supporting layer 285D disposed over a side of the coil adhesive layer 280D opposite the cathode facing surface 215D.

In some embodiments, the separator assembly includes one or more supporting tapes. In some embodiments, the one or more supporting tapes may be disposed on the cathode facing surface of the separator layer. In some embodiments, the one or more supporting tapes may be disposed on the anode facing surface of the separator layer. In some embodiments, the supporting tapes may be disposed on the separator layer such that the supporting tapes are not in contact and/or overlapping each other.

In some embodiments, the supporting tape may be tapered. In some embodiments, an edge of the supporting tape may be tapered. In some embodiments, the supporting tape may be porous. In some embodiments, the supporting tape may be perforated to reduce weight of the electrode assembly and to assist gas and/or electrolyte flow.

In some embodiments, the supporting tape comprises a barrier layer and an adhesive layer (e.g., barrier adhesive layer). In some embodiments, the barrier adhesive layer is resistant to electrolyte. In some embodiments, the barrier adhesive layer adheres to the separator layer during winding. In some embodiments, the barrier adhesive layer is disposed over the cathode facing surface. In some embodiments, the barrier adhesive layer is disposed over the anode facing surface.

In some embodiments, the barrier layer comprises a barrier layer thickness of, of about, of at least, or of at least about, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, 16 $\mu$m, 17 $\mu$m, 18 $\mu$m, 19 $\mu$m, 20 $\mu$m, 21 $\mu$m, 22 $\mu$m, 23 $\mu$m, 24 $\mu$m, 25 $\mu$m, 30 $\mu$m, 35 $\mu$m, 40 $\mu$m, 45 $\mu$m and 50 $\mu$m, or any range of values therebetween. In some embodiments, the barrier layer comprises a barrier layer thickness of about 5-20 μm.

In some embodiments, the barrier layer includes a length of, of about, of at least, or of at least about, 1 mm, 2 mm, 4 mm, 6 mm, 8 mm, 10 mm, 12 mm, 14 mm, 16 mm, 18 mm, 20 mm, 22 mm, 24 mm, 26 mm, 28 mm, 30 mm, 32 mm, 34 mm, 36 mm, 38 mm, 40 mm, 42 mm, 44 mm, 46 mm, 48 mm, 50 mm, 52 mm, 54 mm, 56 mm, 58 mm and 60 mm, or any range of values therebetween. In some embodiments, the barrier layer includes a width of, of about, of at least, or of at least about, 40 mm, 42 mm, 44 mm, 46 mm, 48 mm, 50 mm, 52 mm, 54 mm, 56 mm, 58 mm, 60 mm, 62 mm, 64 mm, 66 mm, 68 mm, 70 mm, 72 mm, 74 mm, 76 mm, 78 mm, 80 mm, 82 mm, 84 mm, 86 mm, 88 mm, 90 mm, 92 mm, 94 mm, 96 mm, 98 mm, 100 mm, 102 mm, 104 mm, 106 mm, 108 mm and 110 mm, or any range of values therebetween.

In some embodiments, the barrier layer includes a Young's Modulus of, of about, of at least, or of at least about, 0.2 GPa, 0.4 GPa, 0.6 GPa, 0.8 GPa, 1 GPa, 1.2 GPa, 1.4 GPa, 1.6 GPa, 1.8 GPa, 2 GPa, 2.2 GPa, 2.4 GPa, 2.6 GPa, 2.8 GPa, 3 GPa, 3.2 GPa, 3.4 GPa, 3.6 GPa, 3.8 GPa, 4 GPa, 4.2 GPa, 4.4 GPa, 4.6 GPa, 4.8 GPa, and 5 GPa, or any range of values therebetween.

In some embodiments, the barrier layer comprises a polymer material. In some embodiments, the polymer is selected from the group consisting of polyimide, polyethylene, polypropylene, or combinations thereof. In some embodiments, the barrier layer comprises a polyimide material.

In some embodiments, the supporting layer comprises a coil core layer and an adhesive layer (e.g., coil adhesive layer). In some embodiments, the coil adhesive layer is resistant to electrolyte. In some embodiments, the coil adhesive layer adheres to the separator layer during winding. In some embodiments, the coil adhesive layer is disposed over the anode facing surface. In some embodiments, the coil adhesive layer is disposed over the cathode facing surface.

In some embodiments, the coil core layer includes a coil core layer thickness of, of about, of at least, or of at least about, 40 μm, 50 μm, 60 μm, 70 μm, 71 μm, 72 μm, 73 μm, 74 μm, 75 μm, 76 μm, 77 μm, 78 μm, 79 μm, 80 μm, 81 μm, 82 μm, 83 μm, 84 μm, 85 μm, 86 μm, 87 μm, 88 μm, 89 μm, 90 μm, 91 μm, 92 μm, 93 μm, 94 μm, 95 μm, 96 μm, 97 μm, 98 μm, 99 μm, 100 μm, 101 μm, 102 μm, 103 μm, 104 μm, 105 μm, 106 μm, 107 μm, 108 μm, 109 μm, 110 μm, 111 μm, 112 μm, 113 μm, 114 μm, 115 μm, 116 μm, 117 μm, 118 μm, 119 μm, 120 μm, 121 μm, 122 μm, 123 μm, 124 μm, 125 μm, 126 μm, 127 μm, 128 μm, 129 μm, 130 μm, 140 μm, 150 μm, 160 μm, 170 μm, 180 μm, 190 μm, 200 μm, 210 μm, 220 μm and 230 μm, or any range of values therebetween. In some embodiments, the coil core layer includes the coil core layer thickness of about 75-125 μm.

In some embodiments, the coil core layer includes a length of, of about, of at least, or of at least about, 20 mm, 22 mm, 24 mm, 26 mm, 28 mm, 30 mm, 32 mm, 34 mm, 36 mm, 38 mm, 40 mm, 42 mm, 44 mm, 46 mm, 48 mm, 50 mm, 52 mm, 54 mm, 56 mm, 58 mm, 60 mm, 62 mm, 64 mm, 66 mm, 68 mm, 70 mm, 72 mm, 74 mm, 76 mm, 78 mm, 80 mm, 82 mm, 84 mm, 86 mm, 88 mm, 90 mm, 92 mm, 94 mm, 96 mm, 98 mm, 100 mm, 102 mm, 104 mm, 106 mm, 108 mm, 110 mm, 112 mm, 114 mm, 116 mm, 118 mm, 120 mm, 122 mm, 124 mm, 126 mm, 128 mm, 130 mm, 132 mm, 134 mm, 136 mm, 138 mm, 140 mm, 142 mm, 144 mm, 146 mm, 148 mm, 150 mm, 152 mm, 154 mm, 156 mm, 158 mm, 160 mm, 162 mm, 164 mm, 166 mm, 168 mm, 170 mm, 172 mm, 174 mm, 176 mm, 178 mm, 180 mm, 182 mm, 184 mm, 186 mm, 188 mm, 190 mm, 192 mm, 194 mm, 196 mm, 198 mm, 200 mm, 202 mm, 204 mm, 206 mm, 208 mm, 210 mm, 212 mm, 214 mm, 216 mm, 218 mm, 220 mm, 222 mm, 224 mm, 226 mm, 228 mm, 230 mm, 232 mm, 234 mm, 236 mm, 238 mm, 240 mm, 242 mm, 244 mm, 246 mm, 248 mm, 250 mm, 252 mm, 254 mm, 256 mm, 258 mm, 260 mm, 262 mm, 264 mm, 266 mm, 268 mm, 270 mm, 272 mm, 274 mm, 276 mm, 278 mm, 280 mm, 282 mm, 284 mm, 286 mm, 288 mm, 290 mm, 292 mm, 294 mm, 296 mm, 298 mm, 300 mm, 302 mm, 304 mm, 306 mm, 308 mm and 310 mm, or any range of values therebetween. In some embodiments, the coil core layer includes a width of, of about, of at least, or of at least about, 40 mm, 42 mm, 44 mm, 46 mm, 48 mm, 50 mm, 52 mm, 54 mm, 56 mm, 58 mm, 60 mm, 62 mm, 64 mm, 66 mm, 68 mm, 70 mm, 72 mm, 74 mm, 76 mm, 78 mm, 80 mm, 82 mm, 84 mm, 86 mm, 88 mm, 90 mm, 92 mm, 94 mm, 96 mm, 98 mm, 100 mm, 102 mm, 104 mm, 106 mm, 108 mm and 110 mm, or any range of values therebetween.

In some embodiments, the coil core layer comprises a stiffness of, of about, of at least, or of at least about, 2 GPa, 4 GPa, 6 GPa, 8 GPa, 10 GPa, 12 GPa, 14 GPa, 16 GPa, 18 GPa, 20 GPa, 22 GPa, 24 GPa, 26 GPa, 28 GPa, 30 GPa, 32 GPa, 34 GPa, 36 GPa, 38 GPa, 40 GPa, 42 GPa, 44 GPa, 46 GPa, 48 GPa, 50 GPa, 52 GPa, 54 GPa, 56 GPa, 58 GPa, 60 GPa, 62 GPa, 64 GPa, 66 GPa, 68 GPa, 70 GPa, 72 GPa, 74 GPa, 76 GPa, 78 GPa, 80 GPa, 82 GPa, 84 GPa, 86 GPa, 88 GPa, 90 GPa, 92 GPa, 94 GPa, 96 GPa, 98 GPa, 100 GPa, 102 GPa, 104 GPa, 106 GPa, 108 GPa, 110 GPa, 112 GPa, 114 GPa, 116 GPa, 118 GPa, 120 GPa, 122 GPa, 124 GPa, 126 GPa, 128 GPa, 130 GPa, 132 GPa, 134 GPa, 136 GPa, 138 GPa, 140 GPa, 142 GPa, 144 GPa, 146 GPa, 148 GPa, 150 GPa, 152 GPa, 154 GPa, 156 GPa, 158 GPa, 160 GPa, 162 GPa, 164 GPa, 166 GPa, 168 GPa, 170 GPa, 172 GPa, 174 GPa, 176 GPa, 178 GPa, 180 GPa, 182 GPa, 184 GPa, 186 GPa, 188 GPa, 190 GPa, 192 GPa, 194 GPa, 196 GPa, 198 GPa, 200 GPa, 202 GPa, 204 GPa, 206 GPa, 208 GPa, 210 GPa, 212 GPa, 214 GPa, 216 GPa, 218 GPa, 220 GPa, 222 GPa, 224 GPa, 226 GPa, 228 GPa, 230 GPa, 232 GPa, 234 GPa, 236 GPa, 238 GPa, 240 GPa, 242 GPa, 244 GPa, 246 GPa, 248 GPa, 250 GPa, 252 GPa, 254 GPa, 256 GPa, 258 GPa, 260 GPa, 262 GPa, 264 GPa, 266 GPa, 268 GPa, 270 GPa, 272 GPa, 274 GPa, 276 GPa, 278 GPa, 280 GPa, 282 GPa, 284 GPa, 286 GPa, 288 GPa, 290 GPa, 292 GPa, 294 GPa, 296 GPa, 298 GPa and 300 GPa, or any range of values therebetween.

In some embodiments, the coil core layer includes a material selected from the group consisting of a metal, an anodized metal, a polymer, and combinations thereof. In some embodiments, the coil core layer comprises metals laminated or disposed between nonconductive polymers. In some embodiments, the coil core layer comprises a metal stable at an anode potential, cathode potential, and/or floating potential. In some embodiments, the metal is selected from the group consisting of copper, aluminum, magnesium, stainless steel, or combinations thereof. In some embodiments, the stainless steel may include an element of iron, chromium, molybdenum, carbon, nickel, nitrogen, manganese, silicon, titanium, vanadium, copper, and combinations thereof. In some embodiments, the polymer is selected from the group consisting of polyimide, polyethylene, polypropylene, or combinations thereof.

Electrode Assemblies Including the Separator Assemblies

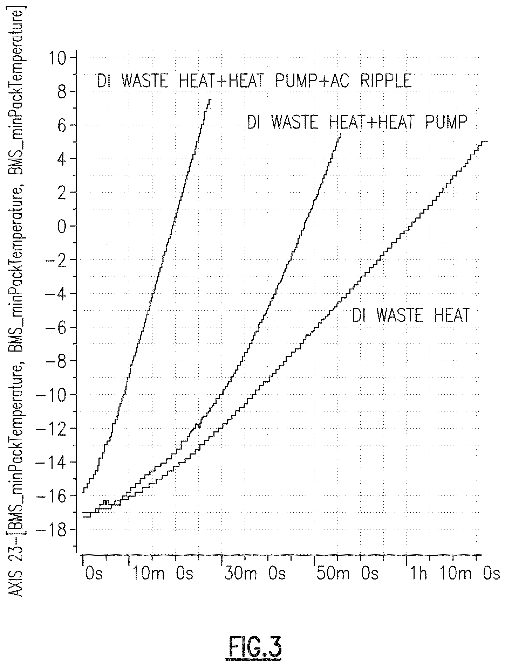

FIGS. 3A-3F are schematic illustrations showing electrode assemblies in various configurations. An electrode assembly that includes a cathode, an anode and a separator assembly may be produced or formed in various configurations. For example, FIG. 3A is a schematic illustration of an electrode assembly 300A. As shown in FIG. 3A, the electrode assembly 300A includes a first separator assembly 305A, a cathode 315A, a second separator assembly 320A and an anode 335A. The first separator assembly 305A includes a first separator layer 307A and a first barrier layer supporting tape 309A. The first barrier layer supporting tape 309A includes a barrier adhesive layer 310A disposed over a cathode facing surface 308A of the first separator layer 307A. The first barrier layer supporting tape 309A also includes a barrier supporting layer 311A disposed over a side of the barrier adhesive layer 310A opposite the cathode facing surface 308A of the first separator layer 307A. The second separator assembly 320A includes a second separator layer 325A, a second barrier layer supporting tape 312A, and a coil core supporting tape 330A. The second separator layer 325A includes a cathode facing surface 322A and an anode facing surface 324A. The second barrier layer supporting tape 312A includes a barrier adhesive layer 313A disposed over the cathode facing surface 322A of the second separator layer 325A. The second barrier layer supporting tape 309A also includes a barrier supporting layer 314A disposed over a side of the barrier adhesive layer 313A opposite the cathode facing surface 322A of the second separator layer 325A. The cathode 315A includes a cathode leading edge 317A and is disposed between the first barrier layer supporting tape 309A and the second barrier layer supporting tape 312A. The coil core supporting tape 330A includes a coil adhesive layer 331A disposed over the anode facing surface 324A of the second separator layer 325A. The coil core supporting tape 330A also includes a coil supporting layer 332A disposed over a side of the coil adhesive layer 331A opposite the anode facing surface 324A of the second separator layer 325A. The anode 335A disposed over the coil supporting layer 332A includes an anode leading edge 337A and an anode overhang area 339A measured by the distance between the anode leading edge 337A and the cathode leading edge 317A. The electrode assembly 300A further includes an anode wrap portion 340A which is the anode portion between the terminus end of the coil core supporting tape 330A and the cathode leading edge 317A.

FIG. 3B is another schematic illustration of an electrode assembly 300B. As shown in FIG. 3B, the electrode assembly 300B includes a first separator assembly 305B, a cathode 315B, a second separator assembly 320B and an anode 335B. The first separator assembly 305B includes a first separator layer 307B and a first barrier layer supporting tape 309B. The first barrier layer supporting tape 309B includes a barrier adhesive layer 310B disposed over a side of the first separator layer 307B opposite the cathode facing surface 308B. The first barrier layer supporting tape 309B also includes a barrier supporting layer 311B disposed over a side of the barrier adhesive layer 310B opposite the first separator layer 307B. The second separator assembly 320B includes a second separator layer 325B, a second barrier layer supporting tape 312B, and a coil core supporting tape 330B. The second separator layer 325B includes a cathode facing surface 322B and an anode facing surface 324B. The second barrier layer supporting tape 312B includes a barrier adhesive layer 313B disposed over the cathode facing surface 322B of the second separator layer 325B. The second barrier layer supporting tape 309B also includes a barrier supporting layer 314B disposed over a side of the barrier adhesive layer 313B opposite the cathode facing surface 322B of the second separator layer 325B. The cathode 315B includes a cathode leading edge 317B and is disposed between the first barrier layer supporting tape 309B and the second barrier layer supporting tape 312B. The coil core supporting tape 330B includes a coil adhesive layer 331B disposed over the anode facing surface 324B of the second separator layer 325B. The coil core supporting tape 330B also includes a coil supporting layer 332B disposed over a side of the coil adhesive layer 331B opposite the anode facing surface 324B of the second separator layer 325B. The anode 335B disposed over the coil supporting layer 332B includes an anode leading edge 337B and an anode overhang area 339B measured by the distance between the anode leading edge 337B and the cathode leading edge 317B. The electrode assembly 300B further includes an anode wrap portion 340B which is the anode portion between the terminus end of the coil core supporting tape 330B and the cathode leading edge 317B.

FIG. 3C is another schematic illustration of an electrode assembly 300C. As shown in FIG. 3C, the electrode assembly 300C includes a first separator assembly 305C, a cathode 315C, a second separator assembly 320C and an anode 335C. The first separator assembly 305C includes a first separator layer 307C, a first barrier layer supporting tape 309C and a coil core supporting tape 330C. The first barrier layer supporting tape 309C includes a barrier adhesive layer 310C disposed over a cathode facing surface 308C. The first barrier layer supporting tape 309C also includes a barrier supporting layer 311C disposed over a side of the barrier adhesive layer 310C opposite the cathode facing surface 308C of the first separator layer 307C. The second separator assembly 320C includes a second separator layer 325C and a second barrier layer supporting tape 312C. The second separator layer 325C includes a cathode facing surface 322C and an anode facing surface 324C. The second barrier layer supporting tape 312C includes a barrier adhesive layer 313C disposed over the cathode facing surface 322C of the second separator layer 325C. The second barrier layer supporting tape 309C also includes a barrier supporting layer 314C disposed over a side of the barrier adhesive layer 313C opposite the cathode facing surface 322C of the second separator layer 325C. The cathode 315C includes a cathode leading edge 317C and is disposed between the first barrier layer supporting tape 309C and the second barrier layer supporting tape 312C. The coil core supporting tape 330C includes a coil adhesive layer 331C and is disposed over a side of the first separator layer 307C opposite the cathode facing surface 308C. The coil core supporting tape 330C also includes a coil supporting layer 332C disposed over a side of the coil adhesive layer 331C opposite the first separator layer 307C. The anode 335C disposed over the anode facing surface 324C of the second separator layer 325C includes an anode leading edge 337C and an anode overhang area 339C measured by the distance between the anode leading edge 337C and the cathode leading edge 317C.

FIG. 3D is another schematic illustration of an electrode assembly 300D. As shown in FIG. D, the electrode assembly 300D includes a first separator assembly 305D, a cathode 315D, a second separator assembly 320D and an anode 335D. The first separator assembly 305D includes a first separator layer 307D and a coil core supporting tape 330D. The coil core supporting tape 330D includes a coil adhesive layer 331D disposed over a side of the first separator layer 307D opposite the cathode facing surface 308D. The coil core supporting tape 330D also includes a coil supporting layer 332D disposed over a side of the coil adhesive layer 331D opposite the first separator layer 307D. The second separator assembly 320D includes a second separator layer 325D and a barrier layer supporting tape 312D. The second separator layer 325D includes a cathode facing surface 322D and an anode facing surface 324D. The barrier layer supporting tape 312D includes a barrier adhesive layer 313D disposed over the cathode facing surface 322D of the second separator layer 325D. The barrier layer supporting tape 312D also includes a barrier supporting layer 314D disposed over a side of the barrier adhesive layer 313D opposite the cathode facing surface 322D of the second separator layer 325C. The cathode 315D includes a cathode leading edge 317D and is disposed between the first separator layer 307D and the barrier layer supporting tape 312D. The anode 335D disposed over the anode facing surface 324D of the second separator layer 325D includes an anode leading edge 337D and an anode overhang area 339D measured by the distance between the anode leading edge 337D and the cathode leading edge 317D.

FIG. 3E is another schematic illustration of an electrode assembly 300E. As shown in FIG. 3E, the electrode assembly 300E includes a first separator assembly 305E, a cathode 315E, a second separator assembly 320E and an anode 335E. The first separator assembly 305E includes a first separator layer 307E and a first barrier layer supporting tape 309E. The first barrier layer supporting tape 309E includes a barrier adhesive layer 310E disposed over a cathode facing surface 308E of the first separator layer 307E. The first barrier layer supporting tape 309E also includes a barrier supporting layer 311E disposed over a side of the barrier adhesive layer 310E opposite the cathode facing surface 308E of the first separator layer 307E. The second separator assembly 320E includes a second separator layer 325E, a second barrier layer supporting tape 312E, and a coil core supporting tape 330E. The second separator layer 325E includes a cathode facing surface 322E and an anode facing surface 324E. The second barrier layer supporting tape 312E includes a barrier adhesive layer 313E disposed over the cathode facing surface 322E of the second separator layer 325E. The second barrier layer supporting tape 309E also includes a barrier supporting layer 314E disposed over a side of the barrier adhesive layer 313E opposite the cathode facing surface 322E of the second separator layer 325E. The cathode 315E includes a cathode leading edge 317E and is disposed between the first barrier layer supporting tape 309E and the second barrier layer supporting tape 312E. The coil core supporting tape 330E includes a coil adhesive layer 331E disposed over the cathode facing surface 322E of the second separator layer 325E. The coil core supporting tape 330E also includes a coil supporting layer 332E disposed over a side of the coil adhesive layer 331E opposite the cathode facing surface 322E of the second separator layer 325E. The anode 335E disposed over the anode facing surface 324E of the second separator layer 325E includes an anode leading edge 337E and an anode overhang area 339E measured by the distance between the anode leading edge 337E and the cathode leading edge 317E.

FIG. 3F is another schematic illustration of an electrode assembly 300F. As shown in FIG. 3F, the electrode assembly 300F includes a first separator assembly 305F, a cathode 315F, a second separator assembly 320F and an anode 335F. The first separator assembly 305F includes a first separator layer 307F and a first barrier layer supporting tape 309F. The first barrier layer supporting tape 309F includes a barrier adhesive layer 310F disposed over a side of the first separator layer 307F opposite the cathode facing surface 308F. The first barrier layer supporting tape 309F also includes a barrier supporting layer 311F disposed over a side of the barrier adhesive layer 310F opposite the first separator layer 307F. The second separator assembly 320F includes a second separator layer 325F, a second barrier layer supporting tape 312F, and a coil core supporting tape 330F. The second separator layer 325F includes a cathode facing surface 322F and an anode facing surface 324F. The second barrier layer supporting tape 312F includes a barrier adhesive layer 313F disposed over the cathode facing surface 322F. The second barrier layer supporting tape 309F also includes a barrier supporting layer 314F disposed over a side of the barrier adhesive layer 313F opposite the cathode facing surface 322F. The cathode 315F includes a cathode leading edge 317F and is disposed between the first barrier layer supporting tape 309F and the second barrier layer supporting tape 312F. The coil core supporting tape 330F includes a coil adhesive layer 331F disposed over the cathode facing surface 322F of the second separator layer 325F. The coil core supporting tape 330F also includes a coil supporting layer 332F disposed over a side of the coil adhesive layer 331F opposite the cathode facing surface 322F of the second separator layer 325F. The anode 335F disposed over the anode facing surface 324F of the second separator layer 325F includes an anode leading edge 337F and an anode overhang area 339F measured by the distance between the anode leading edge 337F and the cathode leading edge 317F.

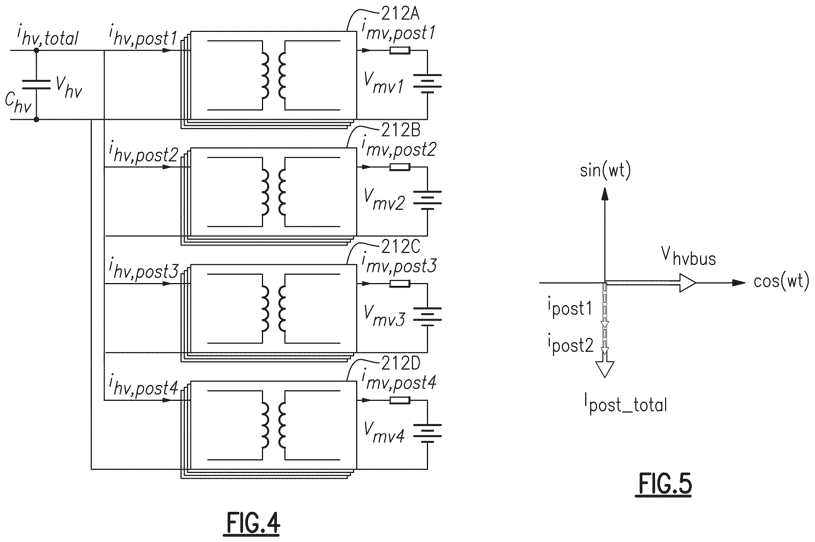

FIGS. 4A-4C are schematic illustrations showing wound electrode assemblies in various configurations. A wound electrode assembly that includes a cathode, an anode and a separator assembly may be produced or formed in various configurations. For example, FIG. 4A is a schematic illustration of a wound electrode assembly 400A. As shown in FIG. 4A, the wound electrode assembly 400A includes an anode 405A, a cathode 415A and a coil core supporting tape 430A. The coil core supporting tape 430A is positioned nearest to a core of the wound electrode assembly 400A. A leading edge of the anode 410A is positioned between the coil core supporting tape 430A. and a leading edge of the cathode 420A is positioned between the anode 410A.

FIG. 4B is another schematic illustration of a wound electrode assembly 400B. As shown in FIG. 4B, the wound electrode assembly 400B includes an anode 405B, a cathode 415B and a coil core supporting tape 430B. The coil core supporting tape 430B is positioned nearest to a core of the wound electrode assembly 400B. A leading edge of the anode 410B and a leading edge of the cathode 420B are positioned between the coil core supporting tape 430B.

FIG. C is another schematic illustration of a wound electrode assembly 400C. As shown in FIG. 4C, the wound electrode assembly 400C includes an anode 405C, a cathode 415C and a coil core supporting tape 430C. The coil core supporting tape 430C is positioned nearest to a core of the wound electrode assembly 400C. A leading edge of the anode 410C is positioned between the coil core supporting tape 430C and the anode 405C and a leading edge of the cathode 420C is positioned between the anode 405C.

In some embodiments, the separator assembly may be positioned between the barrier layer and the coil core layer. In some embodiments, the separator assembly may be positioned between the barrier layer and the cathode. In some embodiments, the separator assembly may be positioned between the coil core layer and the barrier layer. In some embodiments, the separator assembly may be positioned between the barrier layer and the anode. In some embodiments, the separator assembly may be positioned between both the coil core layer and the barrier layer on a side of the cathode facing surface and the anode on a side of the anode facing surface.

In some embodiments, the electrode assembly may include an additional separator assembly. In some embodiments, the additional separator assembly is disposed over the cathode on a side of the cathode opposite the separator assembly. In some embodiments, the additional separator assembly is disposed over the anode on a side of the anode opposite the separator assembly. In some embodiments, the additional separator assembly includes an additional supporting layer.

In some embodiments, the supporting layer is aligned with an anode leading edge (e.g., leading edge of the anode) and/or a cathode leading edge (e.g., leading edge of the cathode). In some embodiments, the supporting layer overlaps the leading edge of the anode and/or the leading edge of the cathode by, by about, by at least, or by at least about, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm and 30 mm, or any range of values therebetween. In some embodiments, the supporting layer overlaps the leading edge of the anode and/or the leading edge of the cathode by about 10-20 mm.

In some embodiments, the supporting layer overlaps the leading edge of the anode overhang area by, by about, by at least, or by at least about, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm and 30 mm, or any range of values therebetween. In some embodiments, the supporting layer overlaps the leading edge of the anode overhang area by about 10-20 mm.

In some embodiments, the anode overhangs the leading edge of the cathode by, by about, by at least, or by at least about, 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, 55 mm, 56 mm, 57 mm, 58 mm, 59 mm, 60 mm, 61 mm, 62 mm, 63 mm, 64 mm, 65 mm, 66 mm, 67 mm, 68 mm, 69 mm and 70 mm, or any range of values therebetween. In some embodiments, the anode overhangs the leading edge of the cathode by about 40-60 mm.

Electrode Film Materials and Electrode Films

Electrode film mixtures and electrode films formed using materials are described herein. In some embodiments, components of an active layer or electrode film may comprise particles, such as a composite material. The particles for forming the active layer or electrode film may be combined with a material to provide an electrode film mixture. In some embodiments, the active layer or electrode film may be formed from the electrode film mixture such that weight percentages of the components of the active layer or electrode film and weight percentages of the components of the electrode film mixture are substantially the same.

An active material (e.g., cathode active material, anode active material) may be used in the preparation of an electrode film and/or electrode for an energy storage device.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., $LiFePO_4$ or "LFP"), lithium manganese iron phosphate (e.g., $LiMn_{0.6}Fe_{0.4}PO_4$ or "LMFP"), lithium nickel manganese cobalt oxide (i.e., $LiNi_xMn_yCo_{1-x-y}O_2$ or "NMC"), lithium nickel cobalt aluminum oxide (i.e., $LiNi_xCo_yAl_zO_2$ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include $LiFePO_4$ (i.e., "lithium iron phosphate" and "LFP") and $LiMn_{1-x}Fe_xPO_4$ (i.e., "lithium manganese iron phosphate" and "LMFP") (e.g., $LiMn_{0.6}Fe_{0.4}PO_4$ or $LiMn_{0.8}Fe_{0.2}PO_4$). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film includes a binder or binder material. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 μm, 100 μm, 50 μm, 40 μm, 30 μm, 20 μm, 15 μm, 10 μm, 5 μm, or any range of values therebetween.

Electrodes and Energy Storage Devices

An energy storage system or device includes a positive electrode (i.e., cathode), a negative electrode (i.e., anode), a separator or separator assembly disposed therebetween, and an electrolyte positioned within a housing. Each electrode includes an electrode film disposed over a current collector. The electrode includes an electrode film disposed over a current collector. In some embodiments, the current collector is a foil. In some embodiments, the current collector is aluminum foil, a copper foil, or combinations thereof. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 μm, 100 μm, 50 μm, 40 μm, 30 μm, 20 μm, 15 μm, 10 μm, 5 μm, or any range of values therebetween. In some embodiments, an active layer is disposed on each side of the current collector.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the electrode (e.g., anode, cathode) comprises a stiffness of, of about, of at least, or of at least about, 2 GPa, 4 GPa, 6 GPa, 8 GPa, 10 GPa, 12 GPa, 14 GPa, 16 GPa, 18 GPa, 20 GPa, 22 GPa, 24 GPa, 26 GPa, 28 GPa, 30 GPa, 32 GPa, 34 GPa, 36 GPa, 38 GPa, 40 GPa, 42 GPa, 44 GPa, 46 GPa, 48 GPa, 50 GPa, 52 GPa, 54 GPa, 56 GPa, 58 GPa, 60 GPa, 62 GPa, 64 GPa, 66 GPa, 68 GPa, 70 GPa, 72 GPa, 74 GPa, 76 GPa, 78 GPa, 80 GPa, 82 GPa, 84 GPa, 86 GPa, 88 GPa, 90 GPa, 92 GPa, 94 GPa, 96 GPa, 98 GPa, 100 GPa, 102 GPa, 104 GPa, 106 GPa, 108 GPa, 110 GPa, 112 GPa, 114 GPa, 116 GPa, 118 GPa, 120 GPa, 122 GPa, 124 GPa, 126 GPa, 128 GPa, 130 GPa, 132 GPa, 134 GPa, 136 GPa, 138 GPa, 140 GPa, 142 GPa, 144 GPa, 146 GPa, 148 GPa, 150 GPa, 152 GPa, 154 GPa, 156 GPa, 158 GPa, 160 GPa, 162 GPa, 164 GPa, 166 GPa, 168 GPa, 170 GPa, 172 GPa, 174 GPa, 176 GPa, 178 GPa, 180 GPa, 182 GPa, 184 GPa, 186 GPa, 188 GPa, 190 GPa, 192 GPa, 194 GPa, 196 GPa, 198 GPa, 200 GPa, 202 GPa, 204 GPa, 206 GPa, 208 GPa, 210 GPa, 212 GPa, 214 GPa, 216 GPa, 218 GPa, 220 GPa, 222 GPa, 224 GPa, 226 GPa, 228 GPa, 230 GPa, 232 GPa, 234 GPa, 236 GPa, 238 GPa, 240 GPa, 242 GPa, 244 GPa, 246 GPa, 248 GPa, 250 GPa, 252 GPa, 254 GPa, 256 GPa, 258 GPa, 260 GPa, 262 GPa, 264 GPa, 266 GPa, 268 GPa, 270 GPa, 272 GPa, 274 GPa, 276 GPa, 278 GPa, 280 GPa, 282 GPa, 284 GPa, 286 GPa, 288 GPa, 290 GPa, 292 GPa, 294 GPa, 296 GPa, 298 GPa and 300 GPa, or any range of values therebetween. In some embodiments, the electrode (e.g., anode, cathode) comprises a stiffness of at least about 2 GPa.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The normalized circularity may be used to determine and/or correlate to a relatively weak core spot (e.g., a spot that may cause electrode buckling) in the wound electrode assembly. Normalized circularity for a nonideal spiral is defined as the minimum ratio between the nonideal (real) geometry versus ideal geometry on a point-by-point basis according to the equation below.

$$Normalized\ Circularity = \min_{i=1,2,\ldots,n} \left( \frac{Nonideal\ Spiral\ Geometry}{Ideal\ Spiral\ Geometry} \right)$$

The nonideal (real) spiral geometry is given by measured Cartesian and polar coordinates ($x$, $y$, $\theta$, $r$) and the ideal spiral geometry is derived from an Archimedean spiral according to $r = \alpha\theta + \beta$. The geometry of a spiral (ideal or nonideal) can be characterized by curvature (K), such as the polar curvature parameterization below.

$$K(\theta) = \frac{|r^2 + 2r'^2 - rr''|}{(r^2 + r'^2)^{3/2}}$$

In some embodiments, the electrode assembly comprises a normalized circularity value of, of about, of at least, or of at least about, 0.7, 0.705, 0.71, 0.715, 0.72, 0.725, 0.73, 0.735, 0.74, 0.745, 0.75, 0.76, 0.77, 0.78, 0.79, 0.8, 0.805, 0.81, 0.815, 0.82, 0.825, 0.83, 0.835, 0.84, 0.845, 0.85, 0.86, 0.87, 0.88, 0.89, 0.90, 0.91, 0.92, 0.93, 0.94, 0.95, 0.96, 0.97, 0.98, 0.99, 1, 1.05, 1.1, 1.15, 1.2 or any range of values therebetween.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate ($LiPF_6$), lithium bis(trifluorometha-

nesulfonyl)imide (LiFSI), lithium tetrafluoroborate (LiBF$_4$), lithium perchlorate (LiClO$_4$), lithium bis(trifluoromethansulfo-nyl)imide (LiN(SO$_2$CF$_3$)$_2$), lithium trifluoromethansulfonate (LiSO$_3$CF$_3$), lithium bis(oxalato)borate (LiB(C$_2$O$_4$)$_2$), lithium bis(fluorosulfonyl)imide (LiN(SO$_2$F)$_2$, lithium difluoro(oxalato)borate (LiC$_2$BF$_2$O$_4$) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments, where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

A method of preparing the electrode assembly may include disposing the separator assembly between the cathode and the anode. In some embodiments, the method of preparing the electrode assembly may comprise disposing the supporting tape over the cathode facing surface at a tape disposing speed of, of about, at least, or at least about, 3 m/s, 4 m/s, 5 m/s, 6 m/s, 7 m/s, 8 m/s, 9 m/s, 10 m/s, 11 m/s, 12 m/s, 13 m/s, 14 m/s, 15 m/s, 16 m/s, 17 m/s, 18 m/s, 19 m/s and 20 m/s, or any range of values therebetween. In some embodiments, the method of preparing the electrode assembly may comprise disposing the supporting tape over the anode facing surface at a tape disposing speed of, of about, at least, or at least about, 3 m/s, 4 m/s, 5 m/s, 6 m/s, 7 m/s, 8 m/s, 9 m/s, 10 m/s, 11 m/s, 12 m/s, 13 m/s, 14 m/s, 15 m/s, 16 m/s, 17 m/s, 18 m/s, 19 m/s and 20 m/s, or any range of values therebetween.

A method of preparing a rolled electrode assembly may include preparing an electrode assembly and rolling the electrode assembly to form a rolled electrode assembly. The method of forming an energy storage device may include preparing the rolled electrode assembly and disposing the rolled electrode assembly and an electrolyte within a housing.

EXAMPLES

Example embodiments of the present disclosure, including processes, materials and/or resultant products, are described in the following examples.

FIGS. 5A and 5B show top-view perspectives of a rolled electrode assembly. As shown in FIG. 5A, the rolled electrode assembly 500A includes an anode 505A with a leading edge of the anode 510A disposed between a coil core layer 530A. The rolled electrode assembly 500A further includes a cathode 520A and a leading edge of the cathode 525A. FIG. 5B illustrates a magnified version of FIG. 5A, showing a rolled electrode assembly 500B. The rolled electrode assembly 500B includes an anode wrap 535 portion of the anode 505B disposed between the terminus of the coil core layer 530B and the cathode 520B, acting as an additional support against electrode buckling.

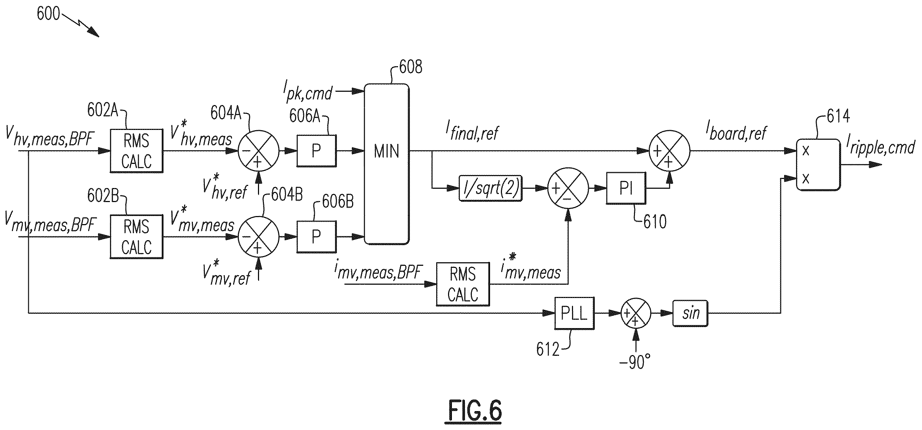

As shown in FIG. 6, a portion of a rolled electrode assembly 600 is magnified on a leading edge of the cathode 625. The rolled electrode assembly 600 includes an anode 605 and a coil core layer 630. A separator layer 615 is disposed between the anode 605 and a cathode 620. The separator layer includes an anode facing surface 613 and a cathode facing surface 617. The anode 605 is disposed over the anode facing surface 613 of the separator layer 615. The coil core layer 630 is disposed over the anode 605, preventing electrode buckling of the rolled electrode assembly's core. The rolled electrode assembly 600 further includes a barrier layer 650 disposed over the cathode facing surface 617 of the separator layer 615, protecting the separator layer from punctures and short circuiting of the electrodes.

While certain embodiments of the inventions have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure. Accordingly, the scope of the present inventions is defined only by reference to the appended claims.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and is defined by the scope of the claims. The language of the claims is to be interpreted broadly based on the language employed in the claims and not limited to the examples described in the present specification or during the prosecution of the application, which examples are to be construed as non-exclusive.

## Claims

1. An electrode assembly for an energy storage device, comprising:

   a cathode;
   an anode; and
   a separator assembly disposed between the cathode and the anode, wherein the separator assembly comprises a separator layer comprising a cathode facing surface and an anode facing surface, and a supporting tape comprising a supporting layer and an adhesive layer, wherein the adhesive layer is disposed directly over the separator layer.

2. The electrode assembly of Claim 1, wherein the anode comprises an anode overhang area.

3. The electrode assembly of Claim 1 or 2, wherein the supporting layer comprises a barrier layer, and wherein the adhesive layer is disposed over the cathode facing surface.

4. The electrode assembly of Claim 3, wherein the barrier layer comprises a barrier layer thickness of about 5-20 $\mu$m, and/or wherein the barrier layer comprises a polyimide material.

5. The electrode assembly of any one of Claims 1-4, wherein the supporting layer comprises a coil core layer, and wherein at least a portion of the adhesive layer is disposed over the anode facing surface.

6. The electrode assembly of Claim 5, wherein the coil core layer comprises a material selected from the group consisting of a metal, a polymer, and combinations thereof, preferably wherein the metal is selected from the group consisting of copper, aluminum, magnesium, or combinations thereof, and/or wherein the coil core layer comprises a coil core layer thickness of about 75-125 $\mu$m, and/or wherein the coil core layer is disposed over the anode facing surface.

7. The electrode assembly of any one of Claims 1-6, further comprising an additional separator assembly, wherein the additional separator assembly is disposed over the cathode on a side of the cathode opposite the separator assembly, preferably wherein the additional separator assembly comprises an additional supporting layer.

8. The electrode assembly of Claim 3, wherein the supporting layer is aligned with a leading edge of the anode or a leading edge of the cathode, preferably wherein the supporting layer overlaps the leading edge of the anode or the leading edge of the cathode by about 10-20 mm.

9. The electrode assembly of Claim 8, wherein the anode overhangs the leading edge of the cathode by about 40-60 mm and/or wherein the supporting layer overlaps the leading edge of the anode overhang area by about 10-20 mm.

10. The electrode assembly of any one of Claims 1-9, wherein the anode or cathode comprises a stiffness of at least about 2 GPa.

11. An energy storage device, comprising:

the electrode assembly of any one of Claims 1-10;
an electrolyte; and
a housing, wherein the electrode assembly and the electrolyte are disposed within the housing.

12. A method of preparing the electrode assembly of any one of Claims 1-10, comprising disposing the separator assembly between the cathode and the anode.

13. The method of Claim 12, further comprising disposing the supporting tape over the cathode facing surface at a tape disposing speed of at least about 3 m/s, and/or further comprising disposing the supporting tape over the anode facing surface at a tape disposing speed of at least about 3 m/s.

14. A method of preparing a rolled electrode assembly, comprising:

preparing the electrode assembly according to the method of Claim 12 or 13; and
rolling the electrode assembly to form a rolled electrode assembly.

15. A method of forming an energy storage device, comprising:

preparing the rolled electrode assembly according to the method of Claim 14; and
disposing the rolled electrode assembly and an electrolyte within a housing.

TO AND/OR FROM 202

POST FORWARDS REGULATORY ENERGY AND
BILLING INFORMATION TO UI

100

CHARGE PORT

CP ECU

106 └116

POWER CONVERSION
SYSTEM
108

AC-DC

DC-DC
STEP DOWN

INTERNAL LV 114

UI

COMPRESSOR 110

HVAC

BATTERY
PACK

BMS ECU

104 └102

DRIVE UNIT(S) 112

DI

**FIG.1A**

100

COMPONENTS
160

104

CONTROLLER 140

SENSOR
150

FIG.1B

FIG.2

FIG.3

EP 4 765 266 A1

$i_{hv,total}$  $i_{hv,post1}$  212A  $i_{mv,post1}$

$C_{hv}$  $V_{hv}$  $V_{mv1}$

$i_{hv,post2}$  212B  $i_{mv,post2}$

$V_{mv2}$

$i_{hv,post3}$  212C  $i_{mv,post3}$

$V_{mv3}$

$i_{hv,post4}$  212D  $i_{mv,post4}$

$V_{mv4}$

FIG.4

$\sin(wt)$

$V_{hvbus}$

$\cos(wt)$

$i_{post1}$

$i_{post2}$

$I_{post\_total}$

FIG.5

FIG.6

Europäisches
Patentamt

European
Patent Office

Office européen
des brevets

# EUROPEAN SEARCH REPORT

**Application Number**

EP 25 21 7675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/204357 A1 (KOO SEONGMO [KR] ET AL) 20 June 2024 (2024-06-20) | 1,2,4-15 | INV. |
| Y | * paragraph [0005] - paragraph [0007] * <br> * paragraph [0062] - paragraph [0065] * <br> * paragraph [0070] - paragraph [0141] * <br> * paragraph [0173] - paragraph [0179] * <br> * paragraph [0184] * <br> * figures 1,4-6,9,10 * | 3 | H01M10/04 <br> H01M50/423 <br> H01M50/457 <br> H01M50/474 <br> H01M50/489 <br> H01M10/0587 |
| X | EP 4 418 403 A1 (LG ENERGY SOLUTION LTD [KR]) 21 August 2024 (2024-08-21) | 1,4-15 | |
| Y | * paragraph [0004] - paragraph [0005] * <br> * paragraph [0030] - paragraph [0035] * <br> * paragraph [0049] * <br> * paragraph [0059] - paragraph [0062] * <br> * paragraph [0065] - paragraph [0073] * <br> * paragraph [0107] - paragraph [0109] * <br> * paragraph [0112] - paragraph [0113] * <br> * paragraph [0117] * <br> * paragraph [0149] - paragraph [0157] * <br> * figures 1,2,6-8,14-16 * | 3 | |
| X | KR 2015 0071250 A (LG CHEMICAL LTD [KR]) 26 June 2015 (2015-06-26) | 1,4-15 | TECHNICAL FIELDS SEARCHED (IPC) |
| Y | * paragraph [0018] - paragraph [0019] * <br> * paragraph [0025] * <br> * paragraph [0028] - paragraph [0031] * <br> * paragraph [0037] - paragraph [0039] * <br> * paragraph [0051] - paragraph [0053] * <br> * figures 1-6 * | 3 | H01M |
| X | US 2006/051662 A1 (KWAK YOON T [KR] ET AL) 9 March 2006 (2006-03-09) | 1,4-15 | |
| Y | * paragraph [0036] * <br> * paragraph [0040] - paragraph [0048] * <br> * paragraph [0050] * <br> * figures 1,3,4 * | 3 | |

The present search report has been drawn up for all claims

| Place of search | Date of completion of the search | Examiner |
|---|---|---|
| The Hague | 11 May 2026 | Maxisch, Thomas |

EPO FORM 1503 03.82 (P04C01)

## ANNEX TO THE EUROPEAN SEARCH REPORT
## ON EUROPEAN PATENT APPLICATION NO.

EP 25 21 7675

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2026

| Patent document cited in search report | | | Publication date | Patent family member(s) | | | Publication date |
|---|---|---|---|---|---|---|---|
| US | 2024204357 | A1 | 20-06-2024 | CN | 119013815 | A | 22-11-2024 |
| | | | | DE | 202023002855 | U1 | 09-12-2024 |
| | | | | EP | 4485609 | A1 | 01-01-2025 |
| | | | | KR | 20240082244 | A | 10-06-2024 |
| | | | | US | 2024204357 | A1 | 20-06-2024 |
| EP | 4418403 | A1 | 21-08-2024 | CA | 3238495 | A1 | 23-05-2024 |
| | | | | CN | 118369807 | A | 19-07-2024 |
| | | | | EP | 4418403 | A1 | 21-08-2024 |
| | | | | JP | 7787311 | B2 | 16-12-2025 |
| | | | | JP | 2025500743 | A | 15-01-2025 |
| | | | | JP | 2026048741 | A | 17-03-2026 |
| | | | | KR | 20240072738 | A | 24-05-2024 |
| | | | | KR | 20240123795 | A | 14-08-2024 |
| | | | | US | 20260011870 | A1 | 08-01-2026 |
| | | | | WO | 2024106758 | A1 | 23-05-2024 |
| KR | 20150071250 | A | 26-06-2015 | NONE | | | |
| US | 2006051662 | A1 | 09-03-2006 | CN | 1713417 | A | 28-12-2005 |
| | | | | JP | 5174314 | B2 | 03-04-2013 |
| | | | | JP | 2006012812 | A | 12-01-2006 |
| | | | | KR | 20050123366 | A | 29-12-2005 |
| | | | | US | 2006051662 | A1 | 09-03-2006 |

EPO FORM P0459

For more details about this annex : see Official Journal of the European Patent Office, No. 12/82

**EP 4 765 266 A1**

**Patent documents cited in the description**

- US 97900624